# EUROPEAN PATENT APPLICATION

(11) **EP 4 811 104 A1**
(43) Date of publication of application: **23.09.2026**
(21) Application number: 25199198.0
(22) Date of filing: 29.08.2025
(51) Int. Cl.: G06F 3/12, B41F 33/00, H04N 1/00, G06T 7/00

(54) **INFORMATION PROCESSING SYSTEM, INFORMATION PROCESSING METHOD, AND PROGRAM**

(30) Priority: 17.03.2025 JP 2025042759
(71) Applicant: Fujifilm Business Innovation Corp., Tokyo 107-0052 (JP)
(72) Inventor: OHIRA, Yoshie, Yokohama (JP); KIKUMOTO, Takashi, Yokohama (JP); ISHIKAWA, Shogo, Yokohama (JP)
(74) Representative: Meissner Bolte Partnerschaft mbB

(57) **Abstract**

An information processing system includes a processor configured to: display a follow-up print image to be used in a follow-up print job at a position corrected by correction values set in association with pre-printed paper to be used in the follow-up print job; accept a designation of an area in the follow-up print image displayed at the corrected position; and set, based on the designated area, an inspection area of printed material to be outputted by the follow-up print job.

## Description

### Background

### (i) Technical Field

The present disclosure relates to an information processing system, an information processing method, and a program.

### (ii) Related Art

There is an operation for printing different characters and/or images onto paper that has already been printed (hereinafter referred to as "pre-printed paper"). This operation is referred to as follow-up printing. In some cases, when inspecting printed material that has been printed by a follow-up print job, an area in which to inspect the printed material is set by having a user set a desired area to inspect on a displayed preview image of the follow-up print job. The preview image at this time is generated by compositing a scanned image of the pre-printed paper and a follow-up print image (for example, see Japanese Unexamined Patent Application Publication No. 2023-172256).

### Summary

In some cases, the scanned image of the pre-printed paper may be read at a size, inclination, or the like that is different from the actual pre-printed paper. In displaying the preview image, simply superimposing the scanned image and the follow-up print image will cause the positions of the scanned image and the follow-up print image to be misaligned, which may make it difficult for the user to set the intended inspection area.

Accordingly, it is an object of the present disclosure to provide a system that allows for easy setting of the user-intended inspection area, as compared to the case of accepting the designation of the inspection area while displaying an uncorrected follow-up print image.

According to a first aspect of the present disclosure, there is provided an information processing system including a processor configured to: display a follow-up print image to be used in a follow-up print job at a position corrected by correction values set in association with pre-printed paper to be used in the follow-up print job; accept a designation of an area in the follow-up print image displayed at the corrected position; and set, based on the designated area, an inspection area of printed material to be outputted by the follow-up print job.

According to a second aspect of the present disclosure, in the information processing system according to the first aspect, the processor is configured to: acquire a scan image of the pre-printed paper; and display the follow-up print image superimposed on the acquired scan image.

According to a third aspect of the present disclosure, in the information processing system according to the second aspect, the processor is configured to: if the designated area is an area designated in association with the follow-up print image, set the inspection area using coordinates of the designated area and the correction values; and if the designated area is an area designated in association with the scan image, set the inspection area using coordinates of the designated area and without using the correction values.

According to a fourth aspect of the present disclosure, in the information processing system according to the third aspect, the processor is configured to: when accepting the designation of the area, further accept a designation of whether the area is an area to be associated with the follow-up print image or an area to be associated with the scan image.

According to a fifth aspect of the present disclosure, in the information processing system according to the third aspect, the processor is configured to: if a follow-up print portion of the follow-up print image is not included in the designated area, identify the area as an area associated with the scan image; and if a follow-up print portion of the follow-up print image is included in the designated area, identify the area as an area associated with the follow-up print image.

According to a sixth aspect of the present disclosure, in the information processing system according to the third aspect, the processor is configured to: if a pre-print portion of the scan image is not included in the designated area, identify the area as an area associated with the follow-up print image; and if a pre-print portion of the scan image is included in the designated area, identify the area as an area associated with the scan image.

According to a seventh aspect of the present disclosure, in the information processing system according to the third aspect, the processor is configured to: accept a selection of whether to display the scan image or to display the follow-up print image; and if the scan image was being displayed at the time of accepting the designation of the area, determine that the area is an area designated in association with the scan image, whereas if the follow-up print image was being displayed at the time of accepting the designation of the area, determine that the area is an area designated in association with the follow-up print image.

According to an eighth aspect of the present disclosure, in the information processing system according to any one of the first to seventh aspects, the processor is configured to: when setting an inspection area of printed material to be outputted by the follow-up print job, store coordinates of the inspection area and the correction values in association with each other; if inspection is to be executed using the inspection area with respect to printed material to be outputted by a second follow-up print job different from the follow-up print job, compare correction values associated with the inspection area and second correction values associated with pre-printed paper to be used in the second follow-up print job; and if the correction values associated with the inspection area and the second correction values are different, display a warning.

According to a ninth aspect of the present disclosure, in the information processing system according to any one of the first to eighth aspects, the processor is configured to: when setting an inspection area of printed material to be outputted by the follow-up print job, store coordinates of the inspection area and the correction values in association with each other; if inspection is to be executed using the inspection area with respect to printed material to be outputted by a second follow-up print job different from the follow-up print job, compare correction values associated with the inspection area and second correction values associated with pre-printed paper to be used in the second follow-up print job; and if the correction values associated with the inspection area and the second correction values are different, use the correction values associated with the inspection area, the second correction values, and coordinates of the area to set an inspection area of printed material to be outputted by the second follow-up print job.

According to a 10th aspect of the present disclosure, there is provided an information processing method including: displaying a follow-up print image to be used in a follow-up print job at a position corrected by correction values set in association with pre-printed paper to be used in the follow-up print job; accepting a designation of an area in the follow-up print image displayed at the corrected position; and setting, based on the designated area, an inspection area of printed material to be outputted by the follow-up print job.

According to an 11th aspect of the present disclosure, there is provided a program causing a computer to execute a process comprising: displaying a follow-up print image to be used in a follow-up print job at a position corrected by correction values set in association with pre-printed paper to be used in the follow-up print job; accepting a designation of an area in the follow-up print image displayed at the corrected position; and setting, based on the designated area, an inspection area of printed material to be outputted by the follow-up print job.

According to the information processing system as in the first aspect, it is possible to provide a system that allows for easy setting of the user-intended inspection area, as compared to the case of accepting the designation of the inspection area while displaying an uncorrected follow-up print image.

According to the information processing system as in the second aspect, it is possible to designate the inspection area while visualizing the actual printed material.

According to the information processing system as in the third aspect, it is possible to eliminate misalignment between the intended area and the inspection area.

According to the information processing system as in the fourth aspect, it is possible to eliminate misalignment between the intended area and the inspection area.

According to the information processing system as in the fifth aspect, it is possible to eliminate misalignment between the intended area and the inspection area.

According to the information processing system as in the sixth aspect, it is possible to eliminate misalignment between the intended area and the inspection area.

According to the information processing system as in the seventh aspect, it is possible to eliminate misalignment between the intended area and the inspection area.

According to the information processing system as in the eighth aspect, it is possible to prevent inspection of an area different from the intended area.

According to the information processing system as in the ninth aspect, it is possible to eliminate misalignment of the inspection area due to differences between follow-up print jobs.

According to the method as in the 10th aspect, it is possible to provide a system that allows for easy setting of the user-intended inspection area as compared to the case of accepting the designation of the inspection area while displaying an uncorrected follow-up print image.

According to the program as in the 11th aspect, it is possible to provide a system that allows for easy setting of the user-intended inspection area as compared to the case of accepting the designation of the inspection area while displaying an uncorrected follow-up print image.

### Brief Description of the Drawings

Exemplary embodiments of the present disclosure will be described in detail based on the following figures, wherein:
Fig. 1 is a diagram for explaining a representation of follow-up printing;
Fig. 2 is a diagram for explaining an example of the configuration of a printed material inspection system anticipated by Exemplary Embodiment 1;
Fig. 3 is a diagram for explaining an example of the hardware configuration of an image forming device used in Exemplary Embodiment 1;
Fig. 4 is a diagram for explaining an example of the hardware configuration of an inspection device used in Exemplary Embodiment 1;
Fig. 5 is a diagram for explaining functional units provided in an inspection device used in Exemplary Embodiment 1;
Fig. 6 is a diagram for explaining an example of a management screen corresponding to a correction management unit;
Fig. 7 is a diagram for explaining an example of an editing screen;
Fig. 8 is a flowchart for explaining an example of an inspection area accepting process;
Fig. 9 is a diagram for explaining an example of the display of an area setting screen;
Fig. 10 is a diagram illustrating an enlarged view of the vicinity of the origin of a reference image field;
Fig. 11 is a diagram for explaining a case in which correction values set in an image forming device are not applied to the display of a reference image field;
Fig. 12 is a diagram for explaining an example of an inspection settings file;
Fig. 13 is a flowchart for explaining an example of an inspection area accepting process;
Fig. 14 is a diagram for explaining another example of the display of an area setting screen;
Fig. 15 is a flowchart for explaining an example of an inspection process;
Fig. 16 is a diagram for explaining an example of an inspection settings file;
Fig. 17 is a diagram for explaining an example of a warning message;
Fig. 18 is a flowchart for explaining another example of an inspection process;
Fig. 19 is a flowchart for explaining an example of an inspection area accepting process;
Fig. 20 is a diagram for explaining another example of data in an inspection settings file;
Fig. 21 is a flowchart for explaining another example of an inspection process;
Fig. 22 is a diagram for explaining an example in which inspection areas are set in both a follow-up print image and a pre-print image;
Fig. 23 is a diagram for explaining another example of data in an inspection settings file;
Fig. 24 is a diagram for explaining an example of the display of an inspection area editing screen;
Fig. 25 is a flowchart for explaining an example of processing operations in step 107 (see Fig. 13);
Fig. 26 is a diagram for explaining an example of display in a display mode for displaying only a pre-print image on an area setting screen;
Fig. 27 is a diagram for explaining an example of display in a display mode for displaying only a follow-up print image on an area setting screen; and
Fig. 28 is a diagram for explaining an example of display in a display mode for displaying, on an area setting screen, an image obtained by compositing a pre-print image and a follow-up print image.

### Detailed Description

Hereinafter, exemplary embodiments of the present disclosure will be described with reference to the drawings.

### <Terms and assumptions>

"Pre-printed paper" refers to paper with characters and/or images already printed thereon. "Follow-up printing" refers to printing additional characters and/or images on pre-printed paper. The printing of the pre-printed paper and the follow-up printing are independent printing processes. For this reason, the image forming device used for the printing of the pre-printed paper may be different from the image forming device used for the follow-up printing. A "follow-up print image" refers to an image or a representation of an image in which characters and/or images to be printed by follow-up printing are laid out on paper. A "pre-print image" refers to an image of pre-printed paper or a representation thereof.

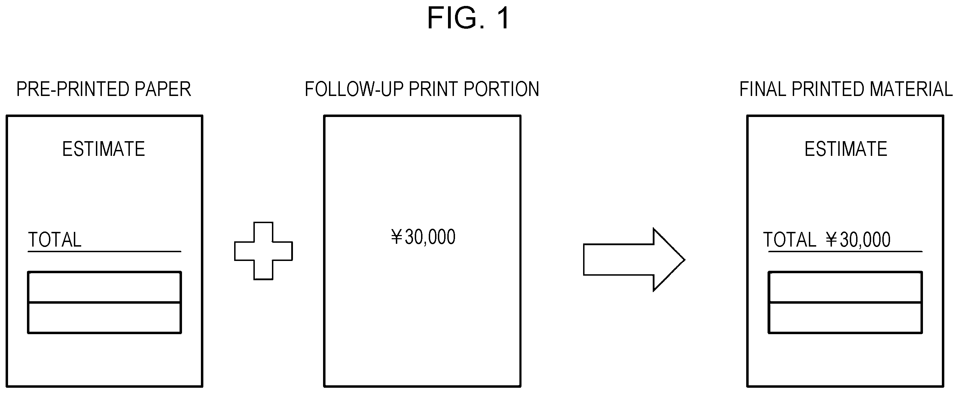

Fig. 1 is a diagram for explaining a representation of follow-up printing. In the case of Fig. 1, an estimate form has been printed onto pre-printed paper. However, a monetary amount field on the pre-printed paper is blank. This is because the monetary amount is to be decided for each transaction. "¥30,000" in Fig. 1 corresponds to an image in which a monetary amount to be printed by follow-up printing is laid out to fit the estimate form. The final printed material shows a state in which the monetary amount is printed on the pre-printed paper.

A "print job" refers to print commands to be given to an image forming device. A print job contains print data. A "follow-up print job" is an example of a print job. In the following, when distinguishing between a "print job giving an instruction for follow-up printing" and a "print job for other than follow-up printing", the "print job giving an instruction for follow-up printing" is referred to as a follow-up print job.

### <Exemplary Embodiment 1>

### <System configuration>

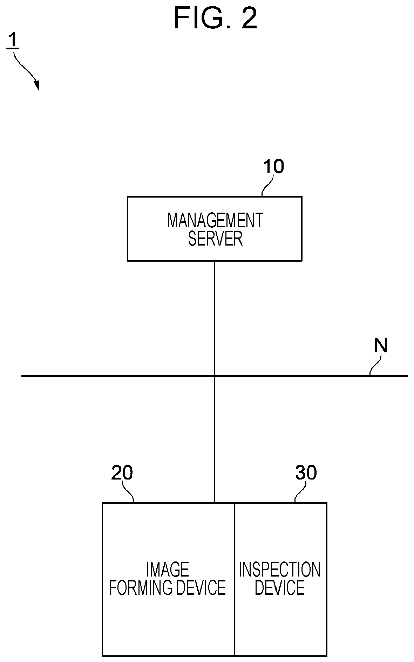

Fig. 2 is a diagram for explaining an example of the configuration of a printed material inspection system 1 anticipated by Exemplary Embodiment 1. The printed material inspection system 1 includes a management server 10, an image forming device 20, an inspection device 30, and a network N. In the case of the present exemplary embodiment, the network N is a local area network (LAN). The LAN may be wired or wireless. However, the network N may also be a dedicated line, or a mobile communication system such as 4G or 5G.

The management server 10 is a computer that manages print jobs. Print jobs are the units of processing and also the units of management for printing. The management server 10 gives a print job to the image forming device 20. A print job contains print data. The print data is described in a page description language (PDL), for example. The image forming device 20 is a device that forms an image on paper by executing a print job. In the case of the present exemplary embodiment, the paper is pre-printed paper.

The inspection device 30 is a device that inspects the quality of a printed result. A printed result refers to printed paper that is outputted from the image forming device 20. As an example, the "final printed material" in Fig. 1 is a printed result. The inspection device 30 inspects the printed result for defects such as smudges and positional misalignment in an inspection area designated in advance. The inspection device 30 is an example of an information processing system.

### <Device configuration>

### <Management server>

The management server 10 has a processor, semiconductor memory, an auxiliary storage device, a monitor, and a communication interface. Each device is connected through a bus or other signal line. The processor a device that achieves various functions through execution of a program. In this context, "program" is a collective term referring to an operating system (OS) and application programs.

For example, through execution of a program, the processor provides print job management functions to a user. A print job management screen is displayed on the monitor. On the management screen, various information related to print jobs being managed is displayed. On the management screen, it is possible to set an inspection area for each print job. On the management screen, it is also possible to check a result of inspection by the inspection device 30. The semiconductor memory includes for example read-only memory (ROM), in which the Unified Extensible Firmware Interface (UEFI) or the like is stored, and random access memory (RAM), which is used as a work area of the processor.

The auxiliary storage device includes a hard disk drive and/or semiconductor storage, for example. A program and print jobs are stored in the auxiliary storage device, for example. In the case of the present exemplary embodiment, print jobs are given as PDL data, Line Conditioned Data Stream (LCDS) data, or Intelligent Printer Data Stream (IPDS) data, for example. The communication interface is used to communicate with the image forming device 20, the inspection device 30, and the like.

### <Image forming device>

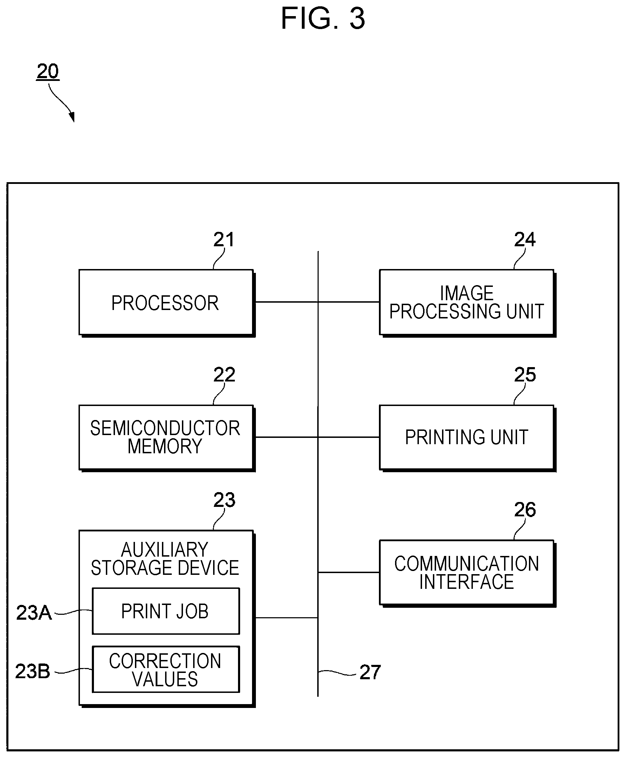

Fig. 3 is a diagram for explaining an example of the hardware configuration of the image forming device 20 used in Exemplary Embodiment 1. The image forming device 20 has a processor 21, semiconductor memory 22, an auxiliary storage device 23, an image processing unit 24, a printing unit 25, and a communication interface 26. Each device is connected through a bus or other signal line 27. Otherwise, the image forming device 20 is also provided with a tray for accommodating paper and a mechanism for transporting paper from the tray.

The processor 21 controls operations by each device through execution of an OS and/or firmware, and forms an image in accordance with print data. The semiconductor memory 22 includes for example ROM, in which the UEFI or the like is stored, and RAM, which is used as a work area of the processor. The auxiliary storage device 23 includes a hard disk drive and/or semiconductor storage, for example. Besides an OS and/or firmware, a print job 23A and correction values 23B received from the management server 10 are stored in the auxiliary storage device 23.

The correction values 23B are also referred to as correction coefficients. The correction values 23B are calculated on the basis of the amount of deviation between a positioning mark already printed on the pre-printed paper and a positioning mark printed by follow-up printing. Note that a single type of pre-printed paper is accommodated in a single tray. For this reason, the correction values 23B are stored for each tray.

The image processing unit 24 is a functional unit that converts, for example, PDL data described in a page description language into raster image processor (RIP) data. The printing unit 25 is a functional unit that forms an image on paper according to an electrophotographic method or an inkjet method, for example. The communication interface 26 is used to communicate with the management server 10 (see Fig. 2), the inspection device 30 (see Fig. 2), and the like.

### <Inspection device>

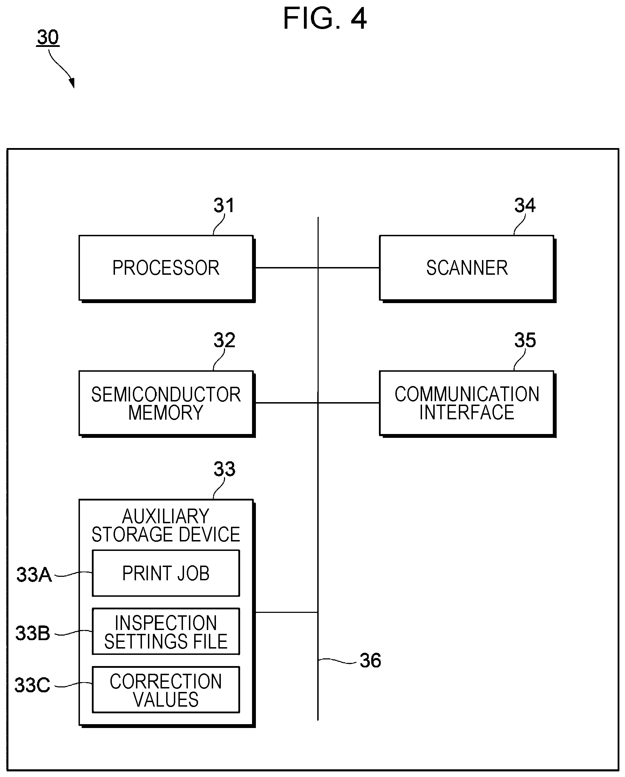

Fig. 4 is a diagram for explaining an example of the hardware configuration of the inspection device 30 used in Exemplary Embodiment 1. The inspection device 30 has a processor 31, semiconductor memory 32, an auxiliary storage device 33, a scanner 34, and a communication interface 35. Each device is connected through a bus or other signal line 36.

The processor 31 inspects the quality of a printed result through the execution of an OS. The semiconductor memory 32 includes for example ROM, in which the UEFI or the like is stored, and RAM, which is used as a work area of the processor. The auxiliary storage device 33 includes a hard disk drive and/or semiconductor storage, for example. Besides an OS, a print job 33A, an inspection settings file 33B, and correction values 33B are stored in the auxiliary storage device 33.

The print job 33A is given from the management server 10 (see Fig. 2). The inspection settings file 33B is settings information related to an area in which to inspect the printed result (in other words, the inspection area). In the case of the present exemplary embodiment, the inspection settings file 33B is set via a management screen displayed on the monitor of the management server 10 (see Fig. 1).

However, if the inspection device 30 is provided with a monitor, the inspection settings file 33B may also be set via a settings screen displayed on the monitor of the inspection device 30. Likewise, if the image forming device 20 is provided with a monitor, the inspection settings file 33B may also be set via a settings screen displayed on the monitor of the image forming device 20.

The inspection settings file 33B contains information (for example, coordinate values) about the inspection area, for example. The inspection device 30 inspects the printed result for defects on the basis of the information in the inspection settings file 33B. Correction values 33C correspond to the correction values 23B of the image forming device 20 (see Fig. 3), and are acquired from the image forming device 20. In the case of the present exemplary embodiment, the correction values 33C are used to display a preview of the follow-up print image.

The scanner 34 is a device that optically reads a representation of an image formed on the surface of paper and outputs the optically read representation as image data. In the following, an optically read representation is referred to as a "scan image". The scanner 34 is provided on the paper transport path. In the case of the present exemplary embodiment, the reading of an image by the scanner 34 is executed immediately after the formation of the image by the image forming device 20. The communication interface 35 is used to communicate with the management server 10 (see Fig. 2), the image forming device 20 (see Fig. 2), and the like.

### <Functional configuration>

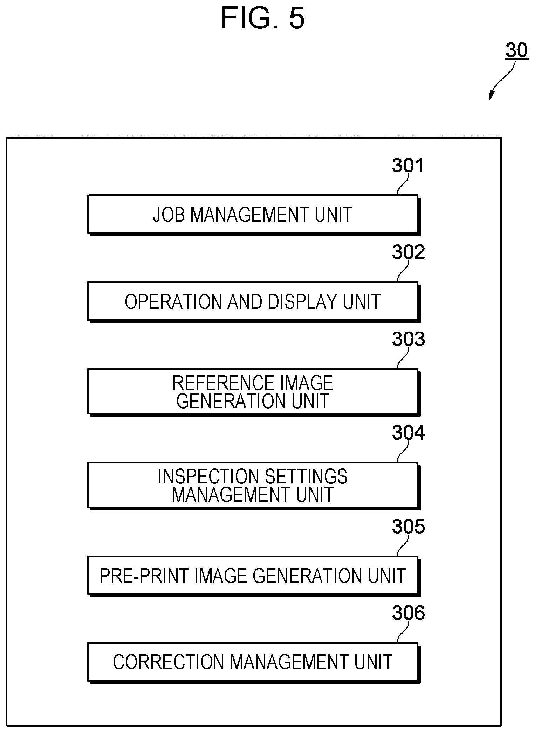

Fig. 5 is a diagram for explaining functional units provided in the inspection device 30 used in Exemplary Embodiment 1. The functional units illustrated in Fig. 5 are achieved through the execution of a program by the processor 31 (see Fig. 4). Fig. 5 illustrates a job management unit 301, an operation and display unit 302, a reference image generation unit 303, an inspection settings management unit 304, a pre-print image generation unit 305, and a correction management unit 306 as functional units provided in the inspection device 30.

The job management unit 301 includes a function for managing the print job 33A (see Fig. 4), and a function for managing the inspection settings file 33B (see Fig. 4) to be used in the print job 33A and information about the pre-printed paper. The information about the pre-printed paper is stored in association with the tray in which the pre-printed paper is loaded.

The operation and display unit 302 includes a function for displaying a RIP image corresponding to the print data of the follow-up print job (in other words, the follow-up print image) as a preview on the monitor, and a function for accepting an inspection area via the preview image. A RIP image is an example of a preview image.

The reference image generation unit 303 includes a function for generating an image to be used in the inspection of printed material (in other words, a reference image). The reference image generated here is also used as the preview image to be displayed by the operation and display unit 302. In the case of a follow-up print job, the reference image contains a follow-up print image, for example. The reference image also contains a pre-print image. The reference image may contain an image obtained by compositing a follow-up print image onto a pre-print image. The compositing of the follow-up print image and the pre-print image may be executed automatically or by the user. In the compositing of the follow-up print image and the pre-print image, the position of the follow-up print image may be corrected using the correction values 33C generated by the correction management unit 306, and then the corrected follow-up print image may be composited with the pre-print image. The reference image is generated individually for every page to be inspected.

The inspection settings management unit 304 is a functional unit that manages the inspection settings file 33B (see Fig. 4). The inspection settings file 33B contains information about one or more inspection areas set on each page of a print job. The print job in this case may be a follow-up print job. The pre-print image generation unit 305 includes a function for generating a scan image of pre-printed paper (in other words, a pre-print image). The pre-print image is outputted as a result of the scanner 34 (see Fig. 4) reading the pre-printed paper, for example. Note that the pre-print image may also be acquired from an external device.

The correction management unit 306 includes a function for managing correction values to be used in a follow-up print job. The correction management unit 306 generates the correction values 33C to be used in the generation of a reference image in the reference image generation unit 303.

### <Correction values management screen>

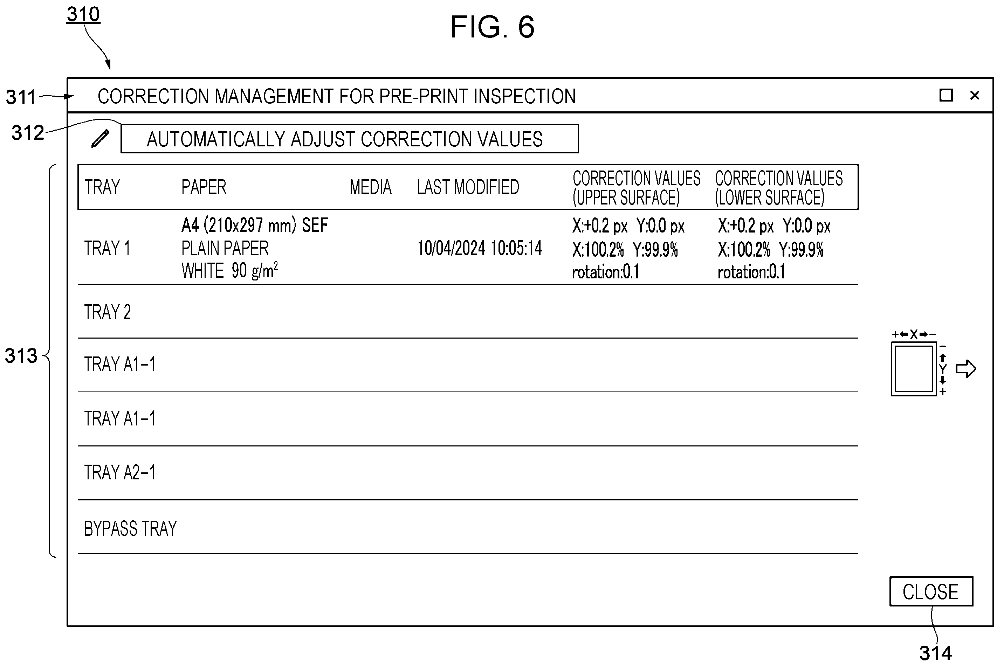

Fig. 6 is a diagram for explaining an example of a management screen 310 corresponding to the correction management unit 306. On the management screen 310 illustrated in Fig. 6, a title 311 stating "Correction Management for Pre-Print Inspection" is displayed. "Pre-print inspection" in the present exemplary embodiment means inspection of the result of follow-up printing on pre-printed paper. In the upper part of the management screen 310, an "Automatically Adjust Correction Values" button 312 is provided.

If the "Automatically Adjust Correction Values" button 312 is operated, the image forming device 20 (see Fig. 2) is instructed to print a correction chart, for example. Note that the chart contains positioning marks. The amount of deviation between a positioning mark already printed on the pre-printed paper and a positioning mark printed by follow-up printing is calculated from a scan image outputted from the scanner 34 (see Fig. 4). Correction values for correcting the amount of deviation are reflected in a management list 313.

The management list 313 illustrated in Fig. 6 indicates that pre-printed paper of A4 size is accommodated in "Tray 1". The correction values are set for each of the upper and lower surfaces of the pre-printed paper. The correction values include, for example, an amount of adjustment in the X direction, an amount of adjustment in the Y direction, scaling factors, and a rotation angle. In the case of Fig. 6, the X direction is the pre-printed paper transport direction, and the Y direction is a direction orthogonal to the X direction. The management screen 310 is closed by the operation of a "Close" button 314.

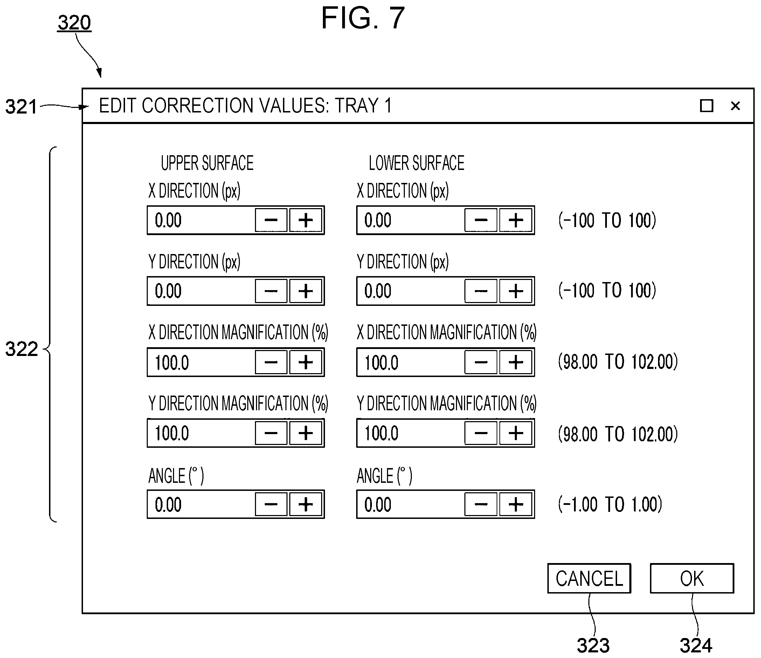

Fig. 7 is a diagram for explaining an example of an editing screen 320. The editing screen 320 is displayed in response to the operation of an Edit button for a specific item on the management screen 310 (see Fig. 6). In the case of Fig. 7, a title 321 stating "Edit Correction Values: Tray 1" is displayed on the editing screen 320. In an editing field 322, the correction values 23B (see Fig. 4) read out from the image forming device 20 (see Fig. 2) are displayed as initial values. However, the user is also able to edit the correction values (for example, coordinates, scaling factors, rotation angles) directly via the editing field 322. If a "Cancel" button 323 is operated, the edited content is canceled. If an "OK" button 324 is operated, the edited content is finalized and reflected on the management screen 310.

### <Inspection area accepting process>

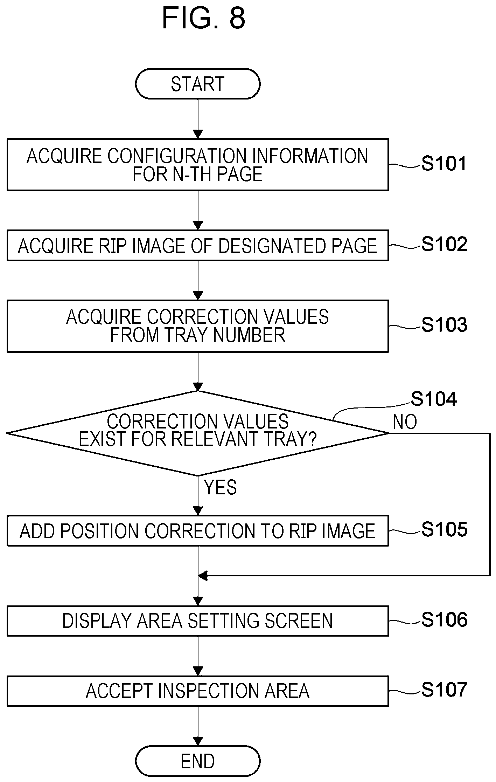

Fig. 8 is a flowchart for explaining an example of an inspection area accepting process. In Fig. 8, "step" is represented by the symbol S. The processing operations illustrated in Fig. 8 are achieved through the execution of a program by the processor 31 (see Fig. 4). In other words, the processing operations illustrated in Fig. 8 are achieved by cooperation among the functional units illustrated in Fig. 4.

First, the processor 31 acquires configuration information for the N-th page (step 101). N is a natural number equal to or greater than 1, the maximum value of which is the number of pages to be printed. In other words, the processor 31 acquires configuration information for a page to be processed. Next, the processor 31 acquires a RIP image of the designated page (step 102). The RIP image at this point is a follow-up print image.

Subsequently, the processor 31 acquires correction values from the tray number (step 103). For example, the correction values (for example, coordinates, scaling factors, rotation angles) set for "Tray 1" are read out. Note that the correction values may also be set for an identifier of the paper to be used in a follow-up print job, and in this case, the processor 31 acquires the correction values on the basis of the identifier of the paper. Next, the processor 31 determines whether or not correction values exist for the relevant tray (step 104). If there are no correction values for the relevant tray (for example, see "Tray 2" on the management screen 310 (see Fig. 6)), a negative result is obtained in step 104. In this case, the processor 31 proceeds to step 106.

On the other hand, if there are correction values for the relevant tray (for example, see "Tray 1" on the management screen 310 (see Fig. 6)), a positive result is obtained in step 104. In this case, the processor 31 adds position correction to the RIP image (that is, the follow-up print image) (step 105). The position correction at this time is correction of the display position of the RIP image.

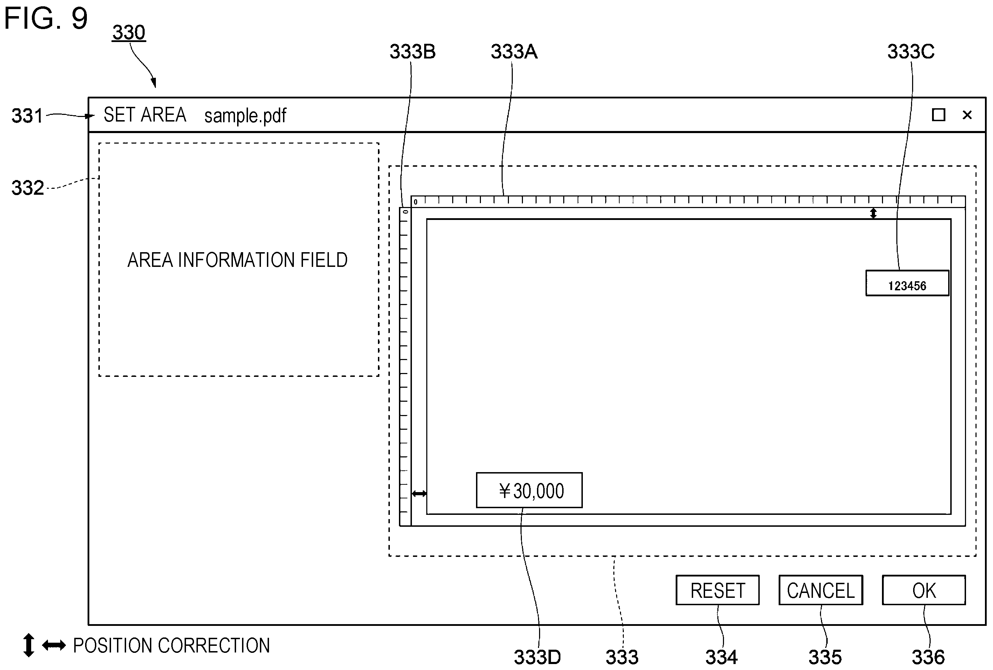

Next, the processor 31 displays the area setting screen. On the area setting screen, the RIP image is display at the position acquired in step 102. Note that if step 105 has been executed, the RIP image is displayed at the corrected position. Fig. 9 is a diagram for explaining an example of the display of an area setting screen 330. On the area setting screen 330 illustrated in Fig. 9, a title 331 stating "Set Area: sample.pdf" is displayed. In this case, "sample.pdf" represents a follow-up print image included in a follow-up print job.

An area information field 332 is located on the left side of the area setting screen 330. The area information field 332 contains a pattern subject to inspection, a paper size, a layout, an inspection level, coordinate values of an inspection area set via a reference image field 333, and the like. In the case of Fig. 9, the reference image field 333 is located to the right of the center of the area setting screen 330. In the reference image field 333, the follow-up print image (white paper on which an estimate number and a total amount are placed) is displayed as a reference image.

In the case of Fig. 9, the horizontal direction is the X direction and the vertical direction of the screen is the Y direction. In the reference image field 333 illustrated in Fig. 9, a ruler 333A giving coordinates in the X direction and a ruler 333B giving coordinates in the Y direction are displayed. The portion where the two rulers 333A and 333B intersect gives the origin of the coordinate system of the reference image field 333. In the case of Fig. 9, the reference image (that is, the follow-up print image) is displayed at a position offset from the rulers 333A and 333B. This offset is the result of the position correction in step 105 (see Fig. 8). In Fig. 9, the position correction is represented by arrows.

The offset causes the reference image (that is, the follow-up print image) to be displayed at coordinates in the coordinate system of the reference image (that is, the coordinate system of the image forming device 20) rather than in the coordinate system of the follow-up print image. Incidentally, in Fig. 9, an inspection area 333C is set in the area range of the estimate number placed in the upper-right portion of the reference image field 333. Also, an inspection area 333D is set in the area range of the total amount placed near the lower-left edge of the reference image field 333. In Fig. 9, the set inspection areas 333C and 333D are represented with color applied.

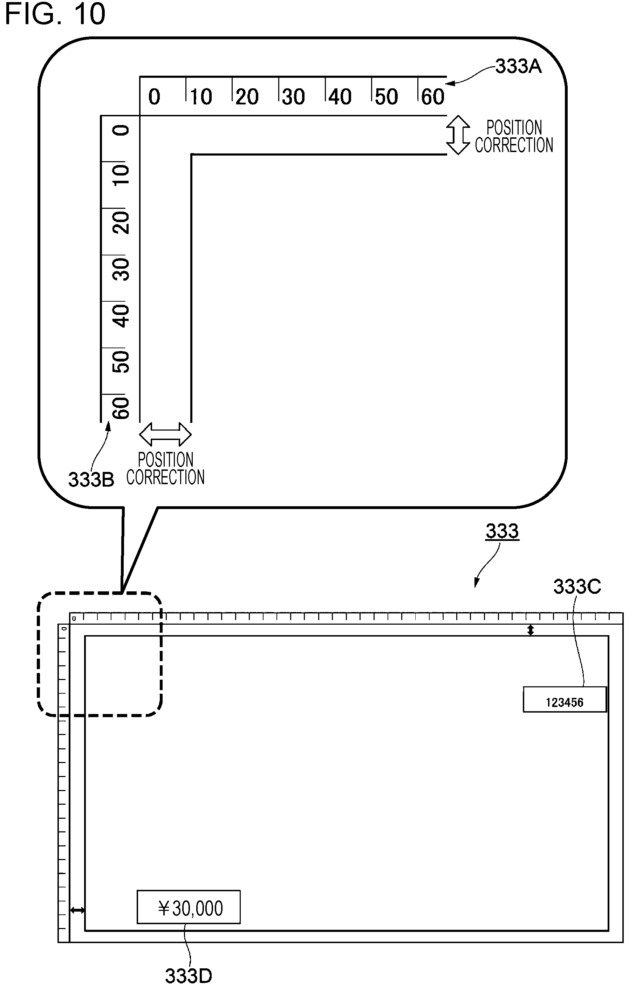

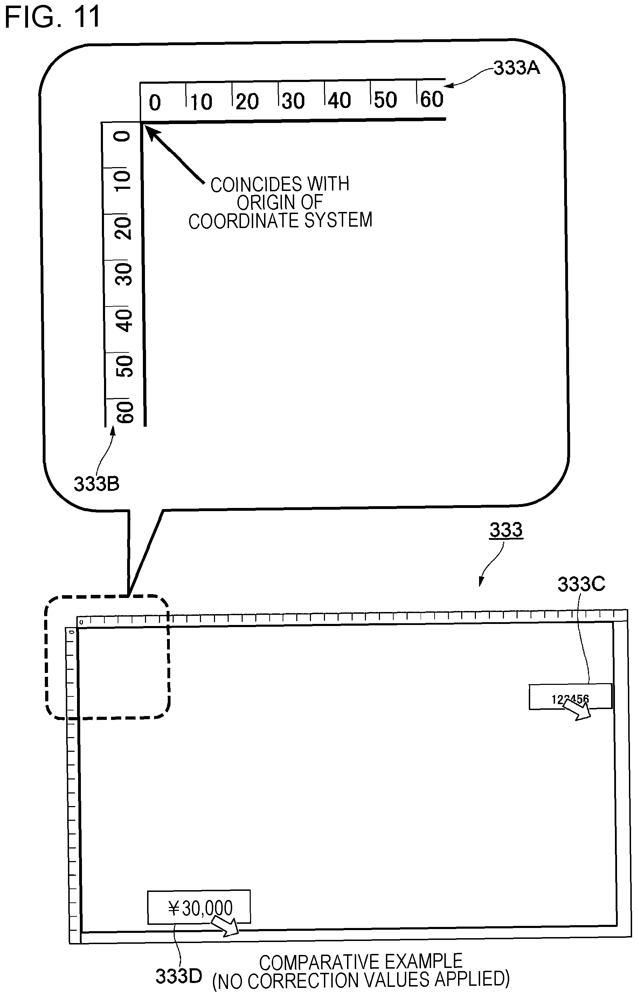

Fig. 10 is a diagram illustrating an enlarged view of the vicinity of the origin of the reference image field 333. In Fig. 10, portions that correspond to Fig. 9 are denoted with the same signs. In Fig. 10, the call-out indicates that a margin corresponding to the position correction is created in the vicinity of the origin of the reference image field 333. Fig. 11 is a diagram for explaining a case in which correction values set in the image forming device 20 are not applied to the display of the reference image field 333. In Fig. 11, portions that correspond to Fig. 10 are denoted with the same signs. In Fig. 11, the reference image is displayed in the coordinate system of the follow-up print image. For this reason, the origin of the follow-up print image coincides with the origin of the reference image field 333.

The description will now return to Fig. 8. When the area setting screen 330 (see Fig. 9) is displayed, the processor 31 accepts an inspection area (step 107). The accepted inspection area is saved in the inspection settings file 33B (see Fig. 4). In the case of the present exemplary embodiment, the coordinates of the inspection area are given by the coordinates after position correction (that is, the coordinates obtained by correcting the coordinates in the follow-up print image according to the correction values).

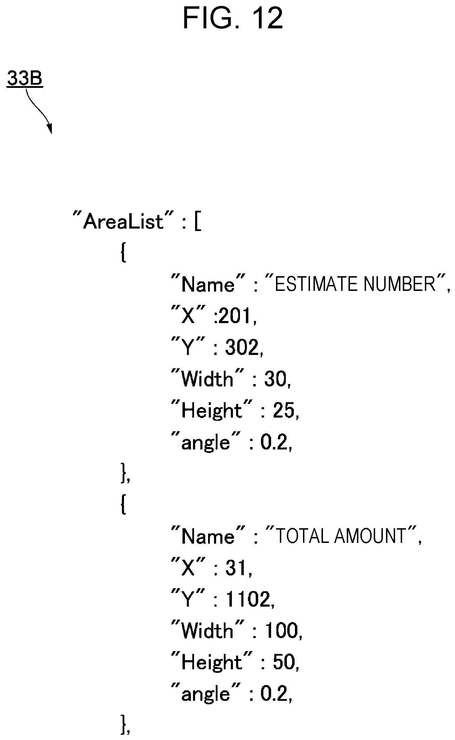

Fig. 12 is a diagram for explaining an example of the inspection settings file 33B. In the inspection settings file 33B illustrated in Fig. 12, information specifying two inspection areas is described. In the case of Fig. 12, one of the inspection areas is "estimate number", and the other is "total amount". For each of the inspection areas, the origin coordinates of the inspection area, the width (distance in the X direction) of the inspection area, the height (distance in the Y direction) of the area, and the inclination angle of the inspection area are described.

### <Summary>

As described above, on the inspection area setting screen in the case of performing follow-up printing on pre-printed paper, a follow-up print image is displayed with the display position thereof corrected by the correction values of the tray accommodating the pre-printed paper to be used in the follow-up printing. The coordinates of the follow-up print image with the corrected display position coincide with coordinates in the coordinate system of the image forming device 20.

An inspection area set with respect to the follow-up print image is recorded using coordinates in the coordinate system of the image forming device 20 rather than in the coordinate system of the follow-up print image. For this reason, the area in which the inspection device 30 (see Fig. 2) is to inspect the result of follow-up printing coincides with the coordinates of the inspection area set in the reference image field 333 (see Fig. 11). For this reason, the user is able to receive the intended area inspection result from the inspection device 30.

### <Exemplary Embodiment 2>

Exemplary Embodiment 1 describes an example of displaying only a follow-up print image as a preview image. Exemplary Embodiment 2 describes an example of displaying a follow-up print image superimposed on a pre-print image as a preview image. Note that the system configuration of the printed material inspection system 1 (see Fig. 2) and the configuration of each device therein are similar to Exemplary Embodiment 1. The following describes an inspection area accepting process in the present exemplary embodiment, with a focus on the portions that differ from Exemplary Embodiment 1.

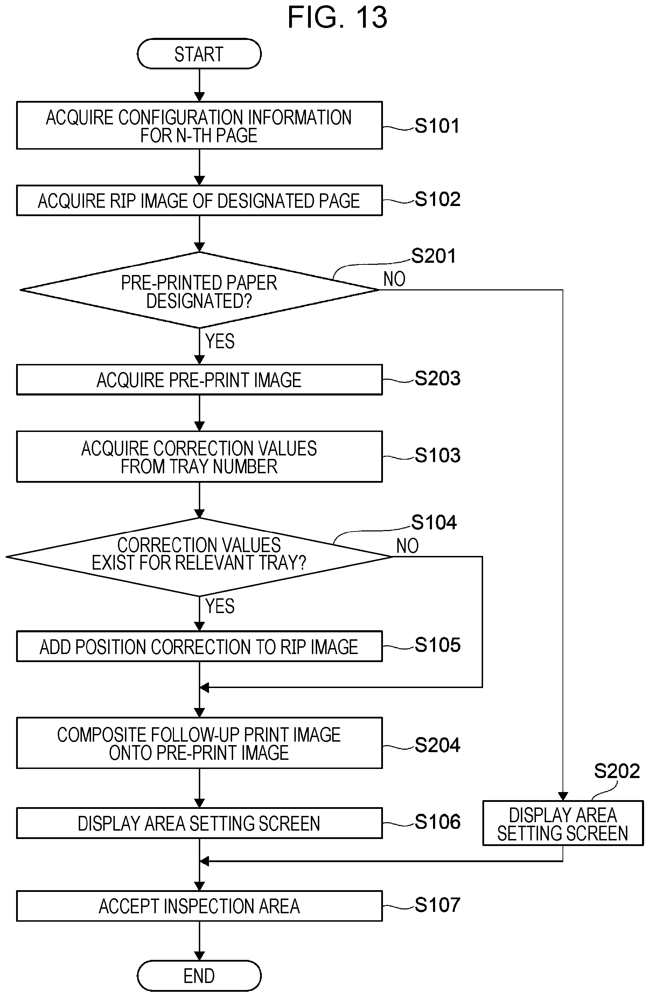

Fig. 13 is a flowchart for explaining an example of an inspection area accepting process. In Fig. 13, portions that correspond to Fig. 8 are denoted with the same signs. The processing operations illustrated in Fig. 13 are similarly achieved through the execution of a program by the processor 31 (see Fig. 4). In other words, the processing operations illustrated in Fig. 13 are achieved by cooperation among the functional units illustrated in Fig. 4.

In the case of Fig. 13, the processor 31 similarly acquires configuration information for the N-th page (step 101). Next, the processor 31 acquires a RIP image of the designated page (step 102). In the present exemplary embodiment, at this point, it is determined whether or not pre-printed paper is designated (step 201).

If pre-printed paper is not designated (for example, in the case of a print job to be printed on fresh paper), a negative result is obtained in step 201. In this case, the processor 31 displays the area setting screen 330 (see Fig. 9) (step 202). Note that in the reference image field 333 (see Fig. 11), a RIP image corresponding to print data is displayed as a preview. On the other hand, if pre-printed paper is designated, a positive result is obtained in step 201. In this case, the processor 31 acquires a pre-print image (step 203). Thereafter, the processor 31 executes steps 103 to 105 in order.

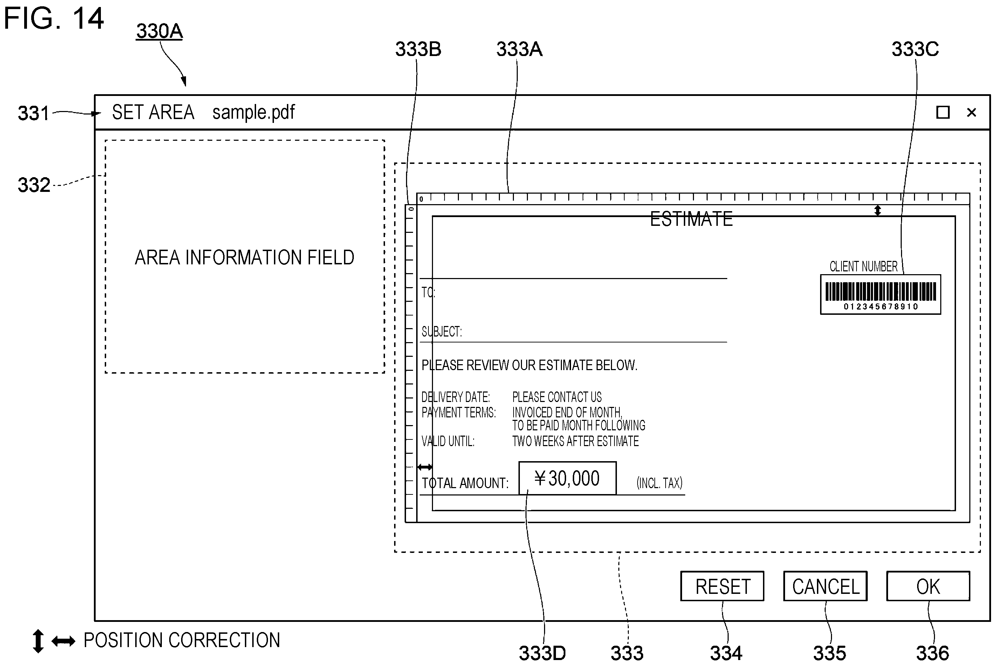

Note that since pre-printed paper is designated, the processor 31 composites the follow-up print image onto the pre-print image (step 204). The composited image serves as the reference image. When the reference image is generated, the processor 31 displays an area setting screen 330A (see Fig. 14) (step 106). In this case, the reference image obtained by compositing the pre-print image and the follow-up print image is displayed as a preview image on the area setting screen 330A.

When the area setting screen in step 202 or step 106 is displayed, the processor 31 accepts an inspection area (step 107). Fig. 14 is a diagram for explaining another example of the display of the area setting screen 330A. In Fig. 14, portions that correspond to Fig. 9 are denoted with the same signs. In the reference image field 333 illustrated in Fig. 14, an estimate form is printed as the pre-print image. The origin of the pre-print image coincides with the origin of the reference image field 333. On the other hand, the follow-up print image is displayed at a position corrected by position correction, in a similar manner to Exemplary Embodiment 1.

### <Summary>

The present exemplary embodiment enables the user to set the inspection areas 333C and 333D while visualizing how the printed material will look after follow-up printing.

### <Exemplary Embodiment 3>

The correction values set with respect to pre-printed paper may be revised when a predetermined condition is met. For example, the correction values are revised every morning. Every time the correction values are changed, it is desirable for the change to be reflected in the inspection settings file 33B (see Fig. 4). However, the inspection settings file 33B merely contains setting values from the time when an inspection area was set. For this reason, a situation may arise in which the correction values in the inspection settings file 33B (that is, the stored values) do not match the correction values at the time of executing inspection (that is, the current values). Note that stored values are an example of correction values associated with an inspection area, and current values are an example of second correction values.

Exemplary Embodiment 3 adds a function for comparing the stored values and the current values of the correction values immediately before executing follow-up printing. Note that the system configuration of the printed material inspection system 1 (see Fig. 2) and the configuration of each device therein are similar to Exemplary Embodiment 1.

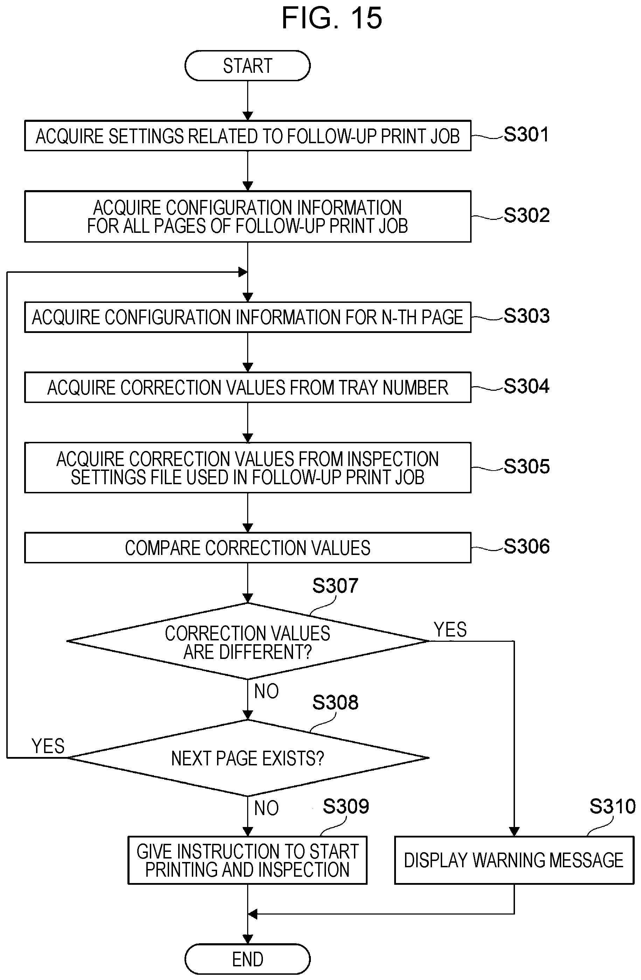

Fig. 15 is a flowchart for explaining an example of an inspection process. The processing operations illustrated in Fig. 15 are similarly achieved through the execution of a program by the processor 31 (see Fig. 4). In other words, the processing operations illustrated in Fig. 15 are achieved by cooperation among the functional units illustrated in Fig. 4.

First, the processor 31 acquires settings related to a follow-up print job (step 301). The settings related to a follow-up print job are acquired from the job management unit 301 (see Fig. 5). Next, the processor 31 acquires configuration information for all pages of the follow-up print job (step 302). The processor 31 acquires configuration information for the N-th page (step 303). N is a natural number equal to or greater than 1, the maximum value of which is the number of pages to be printed.

Next, the processor 31 acquires correction values from the tray number (step 304). The correction values at this point are the correction values (that is, the current values) set for the tray number to be used by the follow-up print job. Subsequently, the processor 31 acquires correction values from the inspection settings file 33B (see Fig. 4) used by the follow-up print job (step 305). For example, correction values from the time when an inspection area was accepted (for example, the day before) are stored in the inspection settings file 33B.

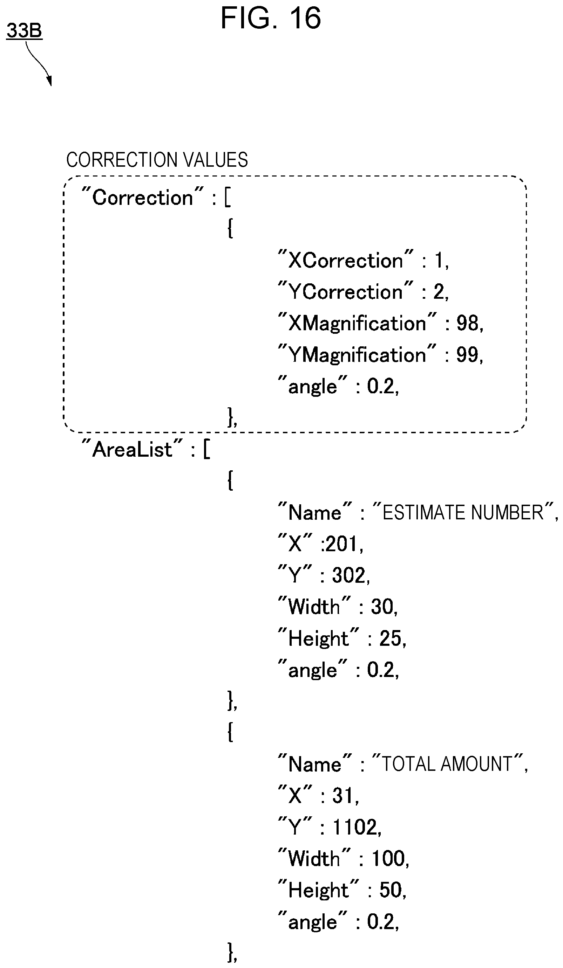

Fig. 16 is a diagram for explaining an example of the inspection settings file 33B (see Fig. 4). In the case of Fig. 16, information about correction values is described in addition to information about inspection areas set for "estimate number" and "total amount". For example, information is recorded to indicate that the correction value in the X direction is "1", the correction value in the Y direction is "2", the scaling factor in the X direction is 98%, the scaling factor in the Y direction is 99%, and the rotation angle is 0.2°.

The description will now return to Fig. 15. Next, the processor 31 compares the correction values (step 306). Specifically, the correction values (that is, the current values) acquired in step 304 and the correction values (that is, the stored values) acquired in step 305 are compared. Next, the processor 31 determines whether or not the correction values are different (step 307). If the correction values match, a negative result is obtained in step 307. In this case, the processor 31 determines whether or not a next page exists (step 308).

If a next page exists, a positive result is obtained in step 308. In this case, the processor 31 returns to step 303 and acquires configuration information for the next page. This loop process is repeated until a mismatch between the current values and the stored values of the correction values is detected. On the other hand, if a next page does not exist (that is, in the case in which the current values and the stored values of the correction values match for all pages), a negative result is obtained in step 308. In this case, the processor 31 gives an instruction to start printing and inspection (step 309). The instruction to start printing is transmitted to the image forming device 20.

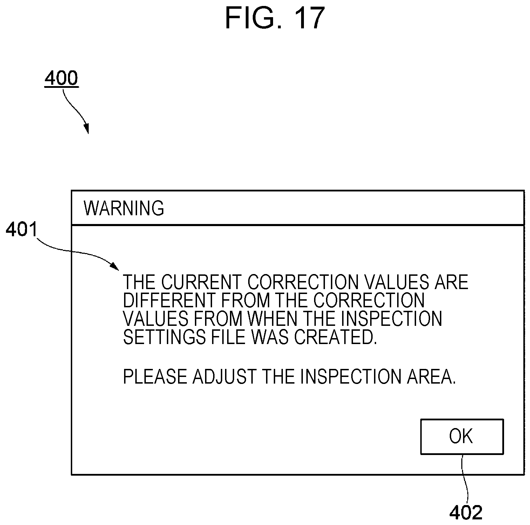

Note that if a mismatch between the current values and the stored values of the correction values is detected, a positive result is obtained in step 307. In this case, the processor 31 displays a warning message 400 (see Fig. 17) (step 310), and then ends the process. In other words, an instruction to start printing and/or inspection is not given. The reason why is that the inspection area settings may be incorrect.

Fig. 17 is a diagram for explaining an example of a warning message 400. In the warning message 400 illustrated in Fig. 17, the following is displayed as message text 401: "The current correction values are different from the correction values from when the inspection settings file was created. Please adjust the inspection area." This display enables the user to notice the change in an inspection area on the image forming device 20 side. If an "OK" button 402 is operated, the warning message 400 is closed.

### <Summary>

In the case of executing follow-up printing by using pre-printed paper on which the same form is printed, a previously set inspection area may be reused as-is. However, there is a possibility that correction values affecting the inspection area are continually revised on the image forming device 20.

On the other hand, the inspection area that the inspection device 30 manages as the inspection settings file 33B (see Fig. 4) is basically information from the time of setup. For this reason, even if there is a change in the correction values on the image forming device 20 side, the inspection area is not changed automatically. However, adopting the mechanism of the present exemplary embodiment makes it possible to notice a change in the correction values before starting follow-up printing and inspection thereof. As a result, area inspection that differs from the intended area inspection may be prevented.

### <Exemplary Embodiment 4>

The present exemplary embodiment describes a function for correcting the position of an inspection area according to the difference between the stored values and the current values when the stored values and the current values of the correction values are different. Note that the system configuration of the printed material inspection system 1 (see Fig. 2) and the configuration of each device therein are similar to Exemplary Embodiment 1. The following describes inspection processes in the present exemplary embodiment, with a focus on the portions that differ from Exemplary Embodiment 1.

### <Process 1>

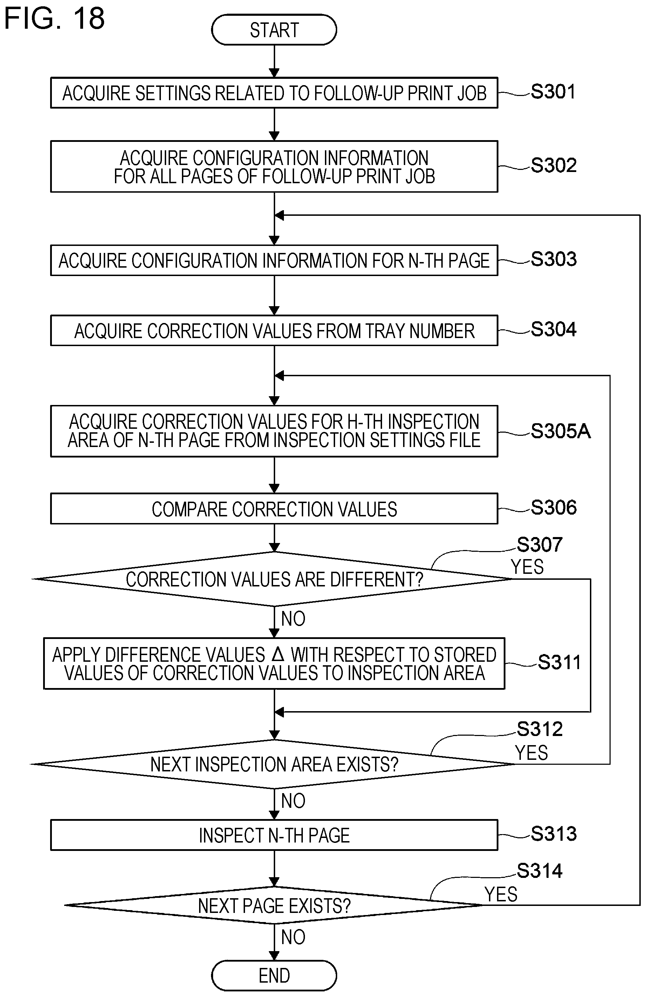

Fig. 18 is a flowchart for explaining another example of an inspection process. In Fig. 18, portions that correspond to Fig. 15 are denoted with the same signs. The processing operations illustrated in Fig. 18 are similarly achieved through the execution of a program by the processor 31 (see Fig. 4). In other words, the processing operations illustrated in Fig. 18 are achieved by cooperation among the functional units illustrated in Fig. 4.

In the case of Fig. 18, the process from step 301 to step 304 is similarly executed in order. Next, the processor 31 acquires the correction values for the H-th inspection area of the N-th page from the inspection settings file 33B (see Fig. 4) (step 305A). H is a natural number equal to or greater than 1, the maximum value of which is the number of inspection areas set within a page. Incidentally, this mechanism may also be applied to Exemplary Embodiment 3.

Subsequently, the processor 31 compares the correction values (step 306). Specifically, the correction values (that is, the current values) acquired in step 304 and the correction values (that is, the stored values) acquired in step 305A are compared. Next, the processor 31 determines whether or not the correction values are different (step 307).

If the stored values and the current values of the correction values match, a negative result is obtained in step 307. In this case, the processor 31 applies the difference values Δ with respect to the stored values of the correction values to the inspection area (step 311). Specifically, the processor 31 corrects the setting values (coordinates, width, length, rotation angle) of the H-th inspection area of the N-th page saved in the inspection settings file 33B by the difference values Δ. Thereafter, the processor 31 proceeds to step 312.

Note that if the stored values and the current values of the correction values are different, a positive result is obtained in step 307. In this case, the processor 31 proceeds directly to step 312. Upon proceeding to step 312, the processor 31 determines whether or not a next inspection area exists. If a next inspection area exists, a positive result is obtained in step 312. In this case, the processor 31 returns to step 305A and repeats the process described above for the remaining inspection area(s).

On the other hand, if a next inspection area does not exist (that is, in the case in which steps 306, 307, and 311 have been executed for all inspection areas on the N-th page), a negative result is obtained in step 312. In this case, the processor 31 executes inspection of the N-th page (step 313). Next, the processor 31 determines whether or not a next page exists (step 314). If a next page exists, a positive result is obtained in step 314. In this case, the processor 31 returns to step 303. On the other hand, if a next page does not exist, a negative result is obtained in step 314. In this case, the processor 31 ends inspection.

### <Process 2>

In the case of Process 1, correction values are included in the setting values (coordinates, width, length, rotation angle) of an inspection area in the inspection settings file 33B (see Fig. 4). However, if the coordinates of an inspection area in the RIP image and the correction values of the image forming device 20 (see Fig. 2) are managed separately as setting values of the inspection area, the most recent correction values may be applied to the inspection area every time the inspection area is inspected.

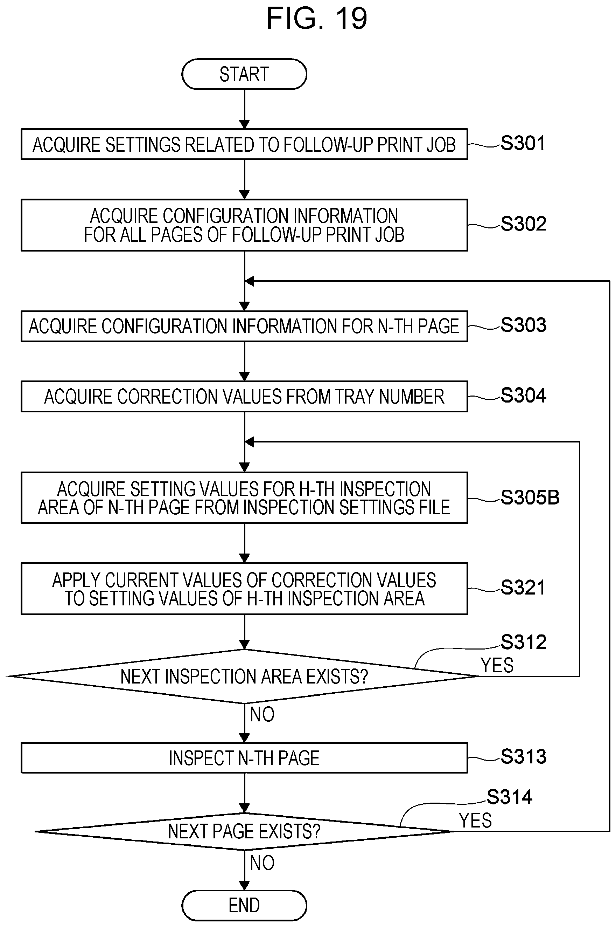

Fig. 19 is a flowchart for explaining an example of an inspection area accepting process. In Fig. 19, portions that correspond to Fig. 18 are denoted with the same signs. The processing operations illustrated in Fig. 19 are similarly achieved through the execution of a program by the processor 31 (see Fig. 4). In other words, the processing operations illustrated in Fig. 19 are achieved by cooperation among the functional units illustrated in Fig. 4.

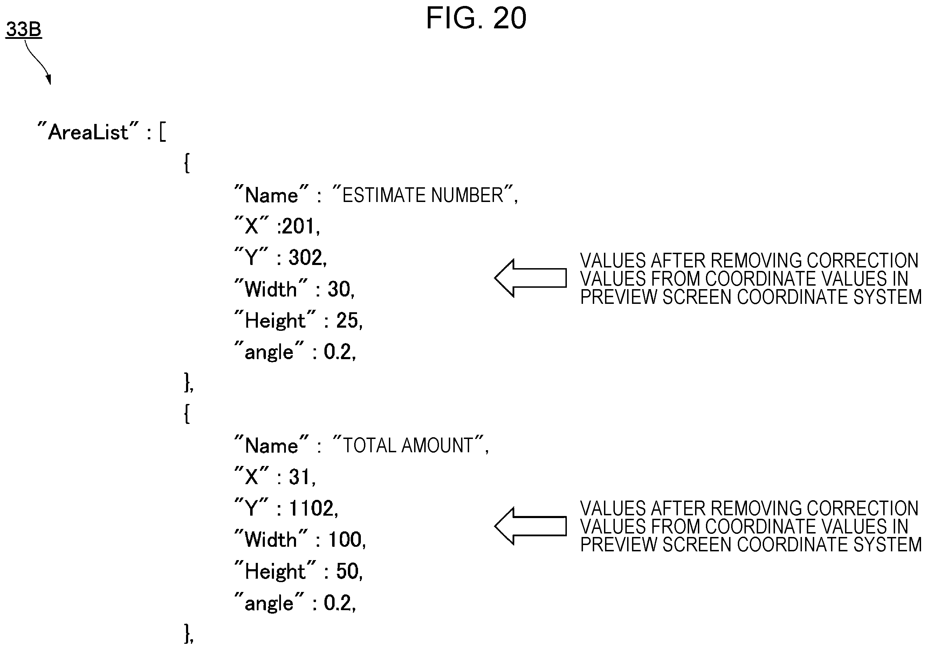

In the case of Fig. 19, the process from step 301 to step 304 is similarly executed in order. Next, the processor 31 acquires the setting values for the H-th inspection area of the N-th page from the inspection settings file (step 305B). Fig. 20 is a diagram for explaining another example of the data in the inspection settings file 33B. In the inspection settings file 33B illustrated in Fig. 20, the values after removing the correction values from the coordinate values in the coordinate system of the preview screen (that is, the numerical values of the inspection area according to the coordinate system of the follow-up print image) are recorded.

For example, in the case of the inspection settings file 33B illustrated in Fig. 16, the X coordinate "201" of "estimate number" includes a correction value of "1", but in the example in Fig. 20, the numerical value "200" from which the correction value "1" has been removed is stored. However, the coordinates and the like of the inspection area in the coordinate system of the follow-up print image and the correction values of the previous inspection may also be managed separately in the inspection settings file 33B.

The description will now return to Fig. 19. Next, the processor 31 applies the current values of the correction values to the setting values of the H-th inspection area (step 321). The setting values of the inspection area at this point are assumed to be numerical values that do not include correction values, as illustrated in Fig. 20. In this case, the processor 31 corrects the corresponding numerical values by using the correction values (that is, the most recent values) read out in step 304. Note that the corrected numerical values are used only for the current inspection, and are not saved in the inspection settings file 33B. Thereafter, the processor 31 executes steps 312 to 314.

### <Summary>

Even if correction values affecting an inspection area are revised on the image forming device 20, the most recent correction values are applied to the inspection area. As a result, the user is able to start inspection without worrying about whether the stored values and the current values of the correction values are the same or different before executing inspection. The user is also able to obtain an inspection result of the intended area inspection.

### <Exemplary Embodiment 5>

The present exemplary embodiment assumes that when a pre-print image and a follow-up print image are displayed on the inspection area setting screen, inspection areas are set in both the follow-up print image and the pre-print image mentioned above. Note that the system configuration of the printed material inspection system 1 (see Fig. 2) and the configuration of each device therein are similar to Exemplary Embodiment 1. The following describes inspection processes in the present exemplary embodiment, with a focus on the portions that differ from Exemplary Embodiment 1.

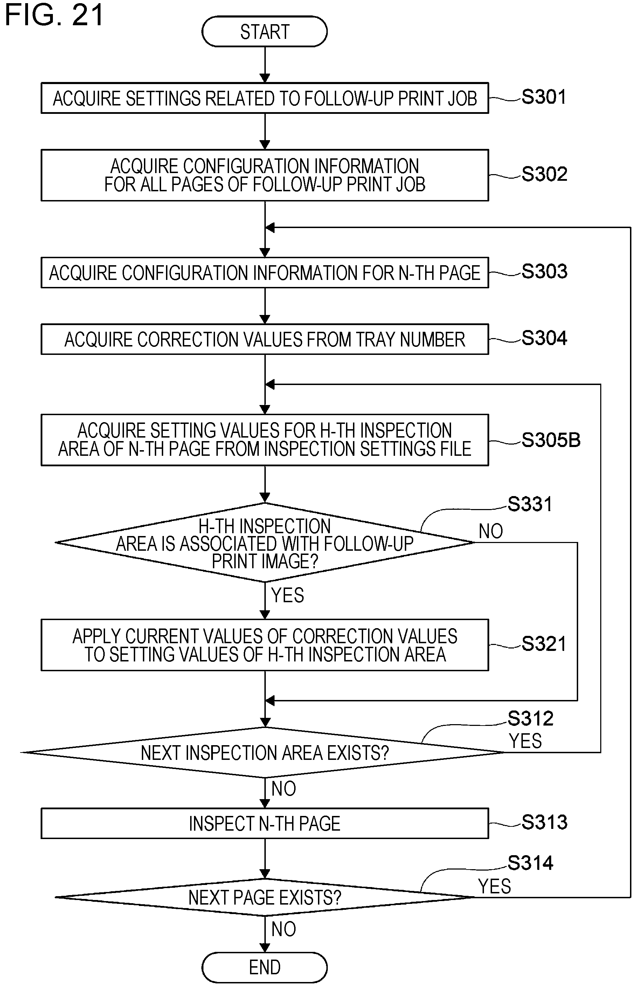

Fig. 21 is a flowchart for explaining another example of an inspection process. In Fig. 21, portions that correspond to Fig. 20 are denoted with the same signs. The processing operations illustrated in Fig. 21 are similarly achieved through the execution of a program by the processor 31 (see Fig. 4). In other words, the processing operations illustrated in Fig. 21 are achieved by cooperation among the functional units illustrated in Fig. 4.

In the case of Fig. 21, the process from step 301 to step 305B is similarly executed in order. Next, the processor 31 determines whether the H-th inspection area is associated with the follow-up print image or is associated with the pre-print image (step 331). For example, the processor 31 determines whether or not a representation of the follow-up print image exists in the H-th inspection area. If a follow-up print portion, that is, a representation of the follow-up print image, exists in the H-th inspection area, it may be determined that H-th inspection area is associated with the follow-up print image, whereas if a pre-print portion, that is, a representation of the pre-print image, exists in the H-th inspection area, it may be determined that the H-th inspection area is associated with the pre-print image.

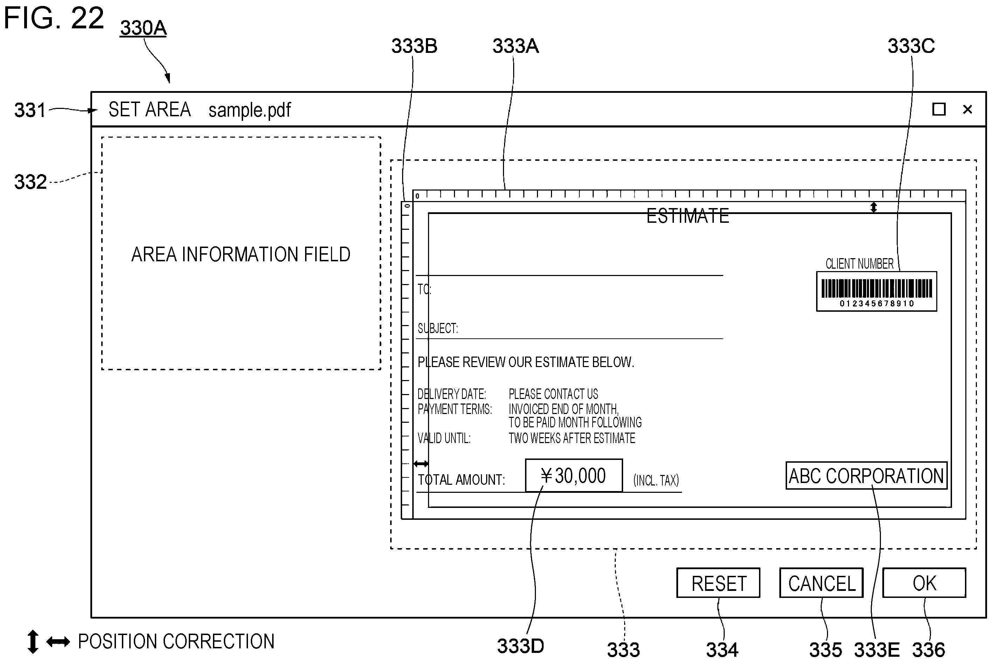

Fig. 22 is a diagram for explaining an example in which inspection areas are set in both the follow-up print image and the pre-print image. In Fig. 22, portions that correspond to Fig. 14 are denoted with the same signs. In the case of the area setting screen 330A illustrated in Fig. 22, inspection areas 333D and 333E are set. The inspection area 333D corresponds to the total amount, and the inspection area 333E corresponds to the company name. Note that the inspection area 333D is a portion of the follow-up print image, whereas the inspection area 333E is a portion of the pre-print image (that is, the estimate).

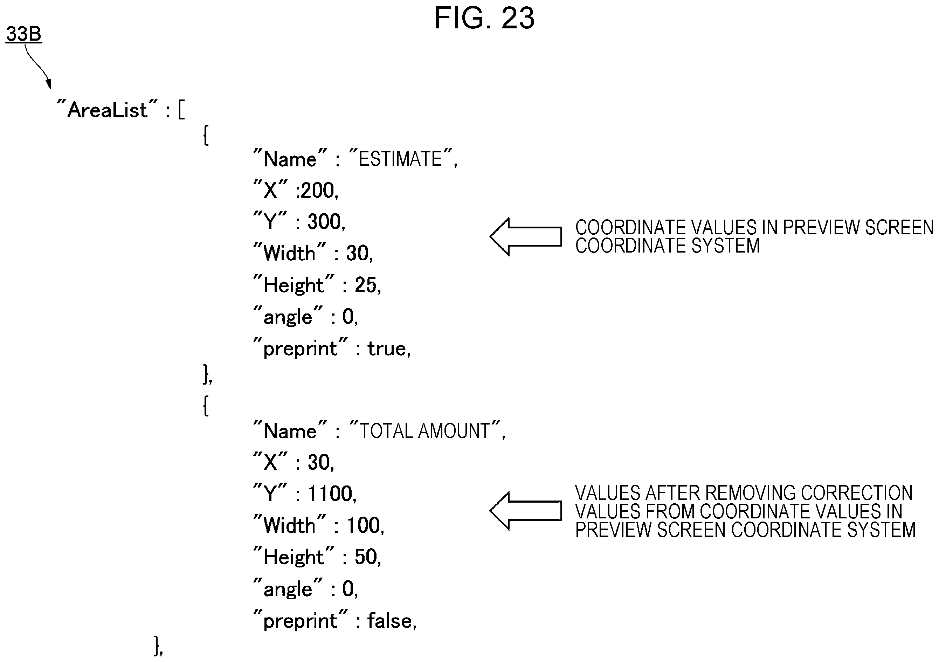

Fig. 23 is a diagram for explaining another example of the data in the inspection settings file 33B. In the case of Fig. 23, a first inspection area is the "estimate" that corresponds to the pre-print image, and a second inspection area is the total amount on the follow-up print image. In the case of the inspection settings file 33B illustrated in Fig. 23, in the first inspection area that corresponds to the pre-print image, coordinate values in the coordinate system of the preview screen (that is, the reference image field 333 (see Fig. 22)) are recorded. On the other hand, in the second inspection area that corresponds to the follow-up print image, the values after removing the correction values from the coordinate values in the coordinate system of the preview screen are stored.

The description will now return to Fig. 21. If the H-th inspection area is an area associated with the follow-up print image, a positive result is obtained in step 331. In this case, the processor 31 applies the current values of the correction values to the setting values of the H-th inspection area (step 321), and proceeds to step 312. On the other hand, if the H-th inspection area is not a portion of the follow-up print image (that is, if the H-th inspection area is an area associated with the pre-print image), a negative result is obtained in step 331. In this case, the processor 31 does not apply the current values to the setting values of the inspection area, and uses as-is the coordinates included in the setting values of the inspection area. Thereafter, the processor 31 executes steps 312 to 314.

### <Summary>

Even if a function for automatically correcting the setting values of inspection areas by using the current values of the correction values set on the image forming device 20 side is enabled, the application of the correction values is limited to an inspection area that is a portion of the follow-up print image. In other words, the correction values are not applied to the setting values of an inspection area set in the pre-print image. As a result, the user is able to start inspection without worrying about whether the stored values and the current values of the correction values are the same or different before executing inspection. The user is also able to obtain an inspection result of the intended area inspection.

### <Other exemplary embodiments>

(1) The foregoing describes exemplary embodiments of the present disclosure, but the technical scope of the present disclosure is not limited to the scope described in the foregoing exemplary embodiments. It is clear from the claims that a variety of modifications or alterations to the foregoing exemplary embodiments are also included in the technical scope of the present disclosure.
(2) Exemplary Embodiment 2 described above assumes that the determination of whether an inspection area is set in association with the follow-up print image or is set in association with the pre-print image is made on the basis of a representation included in the area. However, in a case in which the follow-up print image is composited onto the pre-print image and displayed, like with the area setting screen 330A (see Fig. 14), the user may want to designate which image an inspection area is to be set in association with.

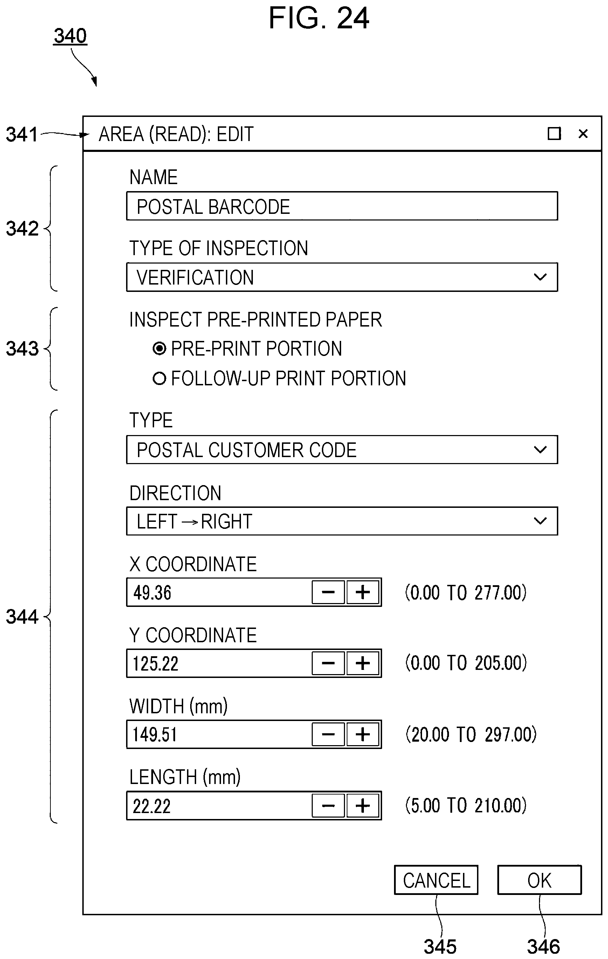

Fig. 24 is a diagram for explaining an example of the display of an inspection area editing screen 340. The editing screen 340 is displayed in response to an edit operation performed on a specific inspection area, for example. In the case of Fig. 24, a title 341 stating "Area (Read): Edit" is displayed on the editing screen 340. The editing screen 340 includes a content field 342, an image designation field 343, an area information field 344, a "Cancel" button 345, and an "OK" button 346.

The content field 342 allows for designation of the name of the inspection area and the type of inspection, for example. The image designation field 323 allows for designation of whether the inspection area is a "pre-print portion" or a "follow-up print portion". In the case of Fig. 24, radio buttons are assigned to the selection options. In the area information field 344, a type, a character string direction, coordinate values, and the like are displayed.

If the "Cancel" button 345 is operated, the edited content is canceled. If the "OK" button 346 is operated, the edited content is finalized, and the editing screen 340 is closed. Displaying the inspection area editing screen 340 enables the user to clearly specify whether an inspection area is to be set with respect to the pre-print image or with respect to the follow-up print image. As a result, incorrect inspection by the inspection device 30 may be avoided.

(3) Exemplary Embodiment 1 described above assumes that an inspection area is set only in the portion of the follow-up print image, and values obtained by correcting the coordinate values in the coordinate system of the follow-up print image according to the correction values are saved in the inspection settings file 33B (see Fig. 4) as the coordinate values of the inspection area. Likewise, Exemplary Embodiment 2, in which the follow-up print image and the pre-print image are composited and displayed, assumes that an inspection area is set in the portion of the follow-up print image, and coordinate values in the coordinate system of the follow-up print image are corrected and saved in the inspection settings file 33B (see Fig. 4).

In other words, Exemplary Embodiments 1 and 2 describe a case in which, when the follow-up print image is displayed on the reference image field 333 (see Fig. 10) at a position corrected by the correction values, the values obtained by correcting the coordinate values in the coordinate system of the follow-up print image by the correction values are set as the setting values of an inspection area. However, the values obtained by correcting coordinates designated on the follow-up print image according to the correction values may also be set as the setting values of an inspection area in the case in which a reference image is displayed in the reference image field 333 in the coordinate system of the follow-up print image, as in Fig. 11.

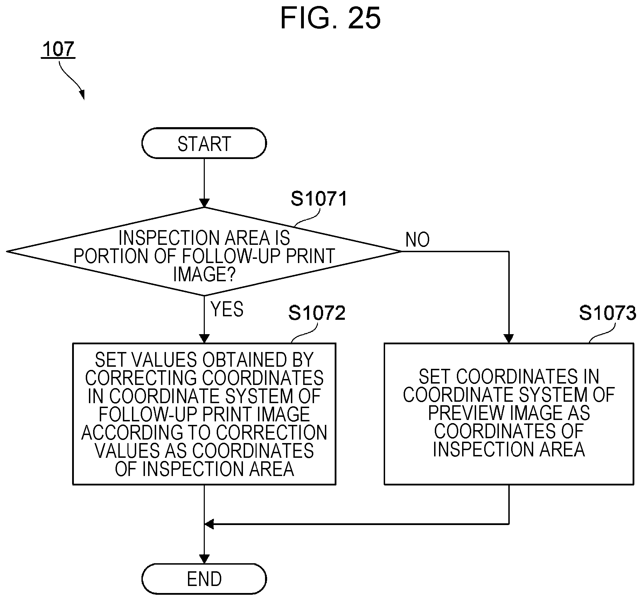

(4) Exemplary Embodiments 1 and 2 described above describe a case in which an inspection area is set with respect to the follow-up print image, and do not describe a case in which an inspection area is set in a portion of the pre-print image. Fig. 25 is a flowchart for explaining an example of processing operations in step 107 (see Fig. 13). The processor 31 determines whether or not the inspection area is a portion of the follow-up print image (step 1071).

If the inspection area contains characters and/or an image belonging to the follow-up print image, a positive result is obtained in step 1071. In this case, the processor 31 sets the values obtained by correcting coordinates in the coordinate system of the follow-up print image according to the correction values as the coordinates of the inspection area (step 1072). On the other hand, if the inspection area does not content characters and/or an image belonging to the follow-up print image (that is, if the inspection area is set for the pre-print image), a negative result is obtained in step 1071. In this case, the processor 31 sets coordinates in the coordinate system of the preview image as the coordinates of the inspection area (step 1073).

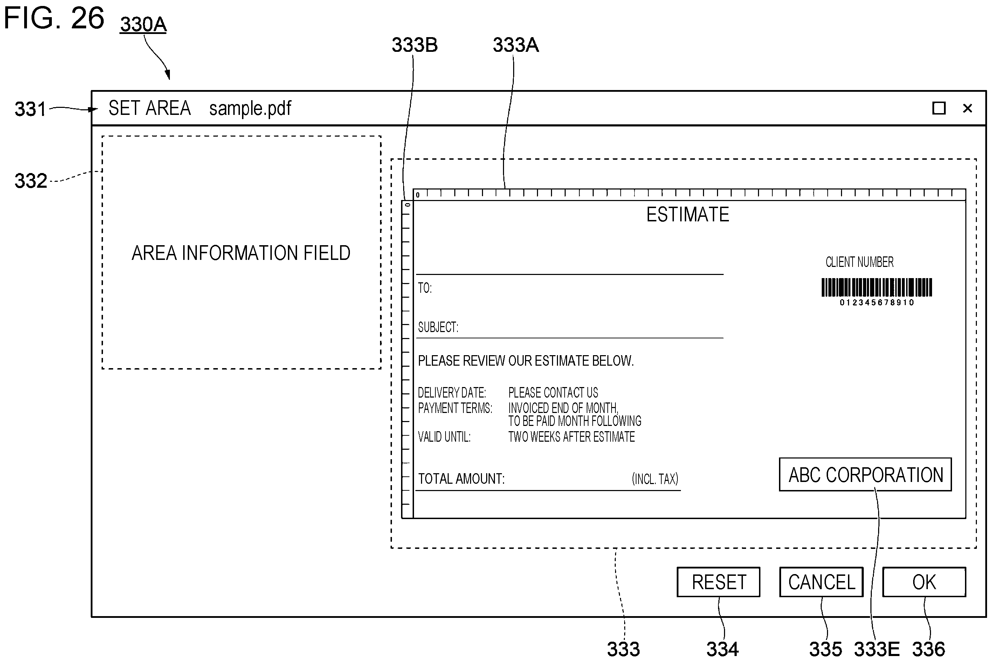

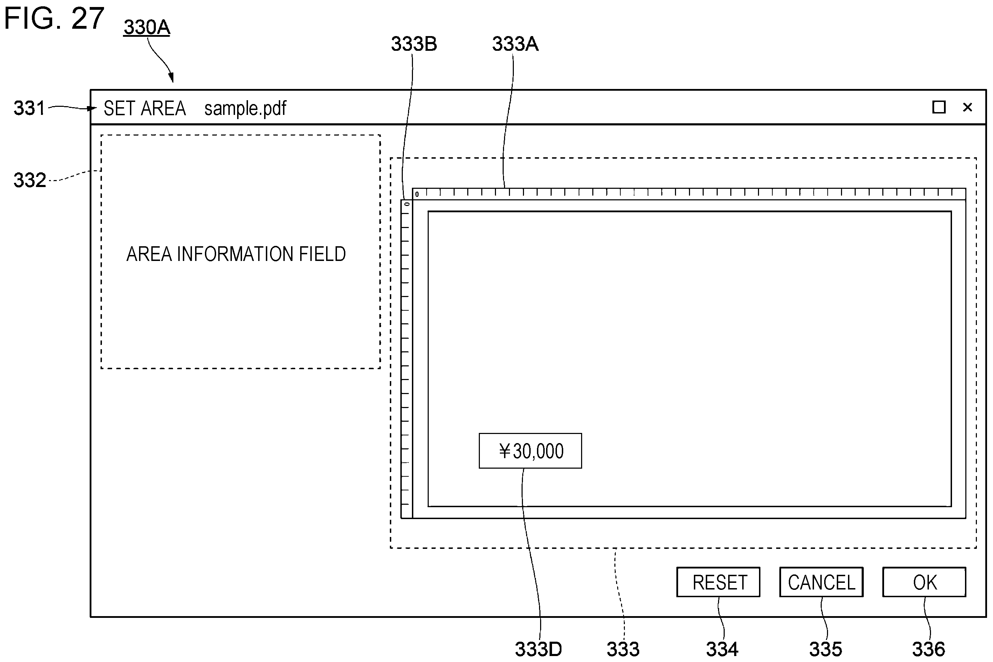

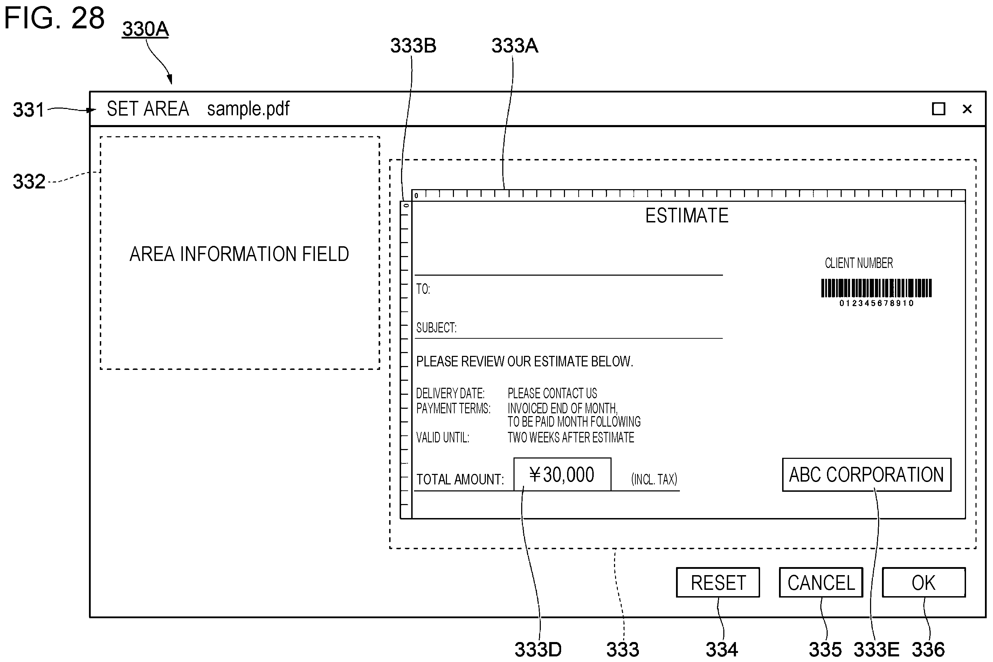

(5) Exemplary Embodiment 1 described above describes a case in which only the follow-up print image is displayed on the area setting screen 330 (see Fig. 9), while Exemplary Embodiment 2 describes a case in which a preview image obtained by compositing the follow-up print image and the pre-print image is displayed in the area setting screen 330. However, a configuration may also be adopted to allow for switching among a display of the pre-print image only (see Fig. 26), a display of the follow-up print image only (see Fig. 27), and a composited display of the pre-print image and the follow-up print image (see Fig. 28), when a designation of an inspection area is accepted.

Fig. 26 is a diagram for explaining an example of display in a display mode for displaying only the pre-print image on the area setting screen 330. Fig. 27 is a diagram for explaining an example of display in a display mode for displaying only the follow-up print image on the area setting screen 330. Fig. 28 is a diagram for explaining an example of display in a display mode for displaying, on the area setting screen 330, an image obtained by compositing the pre-print image and the follow-up print image. In Figs. 27, 27, and 28, portions that correspond to Figs. 9 and 22 are denoted with corresponding signs.

The case of Fig. 26 is the display of the pre-print image only, and therefore the total amount field is blank. In the case of Fig. 27, the follow-up print image is displayed in a state such that the coordinate origin of the follow-up print image and the coordinate origin of the reference image field 333 coincide. In the case of Fig. 28, the follow-up print image is displayed in a positioned state (that is, in a corrected state according to the correction values) with respect to the pre-print image.

Also, in the present exemplary embodiment, a user-given designation of an inspection area is accepted on any of the screens in Figs. 26 to 28. If a designation of an inspection area is accepted on the screen in Fig. 26, the designated inspection area may be determined to be an area set in association with the pre-print image, whereas if a designation of an inspection area is accepted on the screen in Fig. 27, the designated inspection area may be determined to be an area set in association with the follow-up print image.

(6) In the exemplary embodiments described above, the inspection device 30 is described as an independent device. However, some or all of the functions executed in the inspection device 30 may also be executed as part of the functions of the management server 10 (see Fig. 2) or as part of the functions of the image forming device 20 (see Fig. 1).

(7) In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments.

The order in which the processor performs the processes is not limited to the described order and may be changed appropriately. The computer may be a general-purpose computer, an application specific computer, a workstation, or another system capable of performing the processes. The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU).

Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage).

The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

(8) The present disclosure is also applicable to a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### <Appendix>

(((1))) An information processing system comprising a processor configured to: display a follow-up print image to be used in a follow-up print job at a position corrected by correction values set in association with pre-printed paper to be used in the follow-up print job; accept a designation of an area in the follow-up print image displayed at the corrected position; and set, based on the designated area, an inspection area of printed material to be outputted by the follow-up print job.
(((2))) The information processing system according to (((1))), wherein the processor is configured to: acquire a scan image of the pre-printed paper; and display the follow-up print image superimposed on the acquired scan image.
(((3))) The information processing system according to (((2))), wherein the processor is configured to: if the designated area is an area designated in association with the follow-up print image, set the inspection area using coordinates of the designated area and the correction values; and if the designated area is an area designated in association with the scan image, set the inspection area using coordinates of the designated area and without using the correction values.
(((4))) The information processing system according to (((3))), wherein the processor is configured to: when accepting the designation of the area, further accept a designation of whether the area is an area to be associated with the follow-up print image or an area to be associated with the scan image.
(((5))) The information processing system according to (((3))), wherein the processor is configured to: if a follow-up print portion of the follow-up print image is not included in the designated area, identify the area as an area associated with the scan image; and if a follow-up print portion of the follow-up print image is included in the designated area, identify the area as an area associated with the follow-up print image.
(((6))) The information processing system according to (((3))), wherein the processor is configured to: if a pre-print portion of the scan image is not included in the designated area, identify the area as an area associated with the follow-up print image; and if a pre-print portion of the scan image is included in the designated area, identify the area as an area associated with the scan image.
(((7))) The information processing system according to (((3))), wherein the processor is configured to: accept a selection of whether to display the scan image or to display the follow-up print image; and if the scan image was being displayed at the time of accepting the designation of the area, determine that the area is an area designated in association with the scan image, whereas if the follow-up print image was being displayed at the time of accepting the designation of the area, determine that the area is an area designated in association with the follow-up print image.
(((8))) The information processing system according to any one of (((1))) to (((7))), wherein the processor is configured to: when setting an inspection area of printed material to be outputted by the follow-up print job, store coordinates of the inspection area and the correction values in association with each other; if inspection is to be executed using the inspection area with respect to printed material to be outputted by a second follow-up print job different from the follow-up print job, compare correction values associated with the inspection area and second correction values associated with pre-printed paper to be used in the second follow-up print job; and if the correction values associated with the inspection area and the second correction values are different, display a warning.
(((9))) The information processing system according to any one of (((1))) to (((8))), wherein the processor is configured to: when setting an inspection area of printed material to be outputted by the follow-up print job, store coordinates of the inspection area and the correction values in association with each other; if inspection is to be executed using the inspection area with respect to printed material to be outputted by a second follow-up print job different from the follow-up print job, compare correction values associated with the inspection area and second correction values associated with pre-printed paper to be used in the second follow-up print job; and if the correction values associated with the inspection area and the second correction values are different, use the correction values associated with the inspection area, the second correction values, and coordinates of the area to set an inspection area of printed material to be outputted by the second follow-up print job.
(((10))) A program causing a computer to execute a process comprising: displaying a follow-up print image to be used in a follow-up print job at a position corrected by correction values set in association with pre-printed paper to be used in the follow-up print job; accepting a designation of an area in the follow-up print image displayed at the corrected position; and setting, based on the designated area, an inspection area of printed material to be outputted by the follow-up print job.

According to the information processing system as in (((1))), it is possible to provide a system that allows for easy setting of the user-intended inspection area, as compared to the case of accepting the designation of the inspection area while displaying an uncorrected follow-up print image.

According to the information processing system as in (((2))), it is possible to designate the inspection area while visualizing the actual printed material.

According to the information processing system as in (((3))), it is possible to eliminate misalignment between the intended area and the inspection area.

According to the information processing system as in (((4))), it is possible to eliminate misalignment between the intended area and the inspection area.

According to the information processing system as in (((5))), it is possible to eliminate misalignment between the intended area and the inspection area.

According to the information processing system as in (((6))), it is possible to eliminate misalignment between the intended area and the inspection area.

According to the information processing system as in (((7))), it is possible to eliminate misalignment between the intended area and the inspection area.

According to the information processing system as in (((8))), it is possible to prevent inspection of an area different from the intended area.

According to the information processing system as in (((9))), it is possible to eliminate misalignment of the inspection area due to differences between follow-up print jobs.

According to the program as in (((10))), it is possible to provide a system that allows for easy setting of the user-intended inspection area as compared to the case of accepting the designation of the inspection area while displaying an uncorrected follow-up print image.

## Claims

1. An information processing system comprising:
a processor configured to:
display a follow-up print image to be used in a follow-up print job at a position corrected by correction values set in association with pre-printed paper to be used in the follow-up print job;
accept a designation of an area in the follow-up print image displayed at the corrected position; and
set, based on the designated area, an inspection area of printed material to be outputted by the follow-up print job.

2. The information processing system according to claim **1,** wherein the processor is configured to:
acquire a scan image of the pre-printed paper; and
display the follow-up print image superimposed on the acquired scan image.

3. The information processing system according to claim 2, wherein the processor is configured to:
if the designated area is an area designated in association with the follow-up print image, set the inspection area using coordinates of the designated area and the correction values; and
if the designated area is an area designated in association with the scan image, set the inspection area using coordinates of the designated area and without using the correction values.

4. The information processing system according to claim 3, wherein the processor is configured to:
when accepting the designation of the area, further accept a designation of whether the area is an area to be associated with the follow-up print image or an area to be associated with the scan image.

5. The information processing system according to claim 3, wherein the processor is configured to:
if a follow-up print portion of the follow-up print image is not included in the designated area, identify the area as an area associated with the scan image; and
if a follow-up print portion of the follow-up print image is included in the designated area, identify the area as an area associated with the follow-up print image.

6. The information processing system according to claim 3, wherein the processor is configured to:
if a pre-print portion of the scan image is not included in the designated area, identify the area as an area associated with the follow-up print image; and
if a pre-print portion of the scan image is included in the designated area, identify the area as an area associated with the scan image.

7. The information processing system according to claim 3, wherein the processor is configured to:
accept a selection of whether to display the scan image or to display the follow-up print image; and
if the scan image was being displayed at the time of accepting the designation of the area, determine that the area is an area designated in association with the scan image, whereas if the follow-up print image was being displayed at the time of accepting the designation of the area, determine that the area is an area designated in association with the follow-up print image.

8. The information processing system according to any one of claims 1 to 7, wherein the processor is configured to:
when setting an inspection area of printed material to be outputted by the follow-up print job, store coordinates of the inspection area and the correction values in association with each other;
if inspection is to be executed using the inspection area with respect to printed material to be outputted by a second follow-up print job different from the follow-up print job, compare correction values associated with the inspection area and second correction values associated with pre-printed paper to be used in the second follow-up print job; and
if the correction values associated with the inspection area and the second correction values are different, display a warning.

9. The information processing system according to any one of claims 1 to 8, wherein the processor is configured to:
when setting an inspection area of printed material to be outputted by the follow-up print job, store coordinates of the inspection area and the correction values in association with each other;
if inspection is to be executed using the inspection area with respect to printed material to be outputted by a second follow-up print job different from the follow-up print job, compare correction values associated with the inspection area and second correction values associated with pre-printed paper to be used in the second follow-up print job; and
if the correction values associated with the inspection area and the second correction values are different, use the correction values associated with the inspection area, the second correction values, and coordinates of the area to set an inspection area of printed material to be outputted by the second follow-up print job.

10. An information processing method comprising:
displaying a follow-up print image to be used in a follow-up print job at a position corrected by correction values set in association with pre-printed paper to be used in the follow-up print job;
accepting a designation of an area in the follow-up print image displayed at the corrected position; and
setting, based on the designated area, an inspection area of printed material to be outputted by the follow-up print job.

11. A program causing a computer to execute a process comprising:
displaying a follow-up print image to be used in a follow-up print job at a position corrected by correction values set in association with pre-printed paper to be used in the follow-up print job;
accepting a designation of an area in the follow-up print image displayed at the corrected position; and
setting, based on the designated area, an inspection area of printed material to be outputted by the follow-up print job.
